# FASCICULE DE BREVET EUROPEEN

(11) **EP 0 571 251 B1**
(45) Date de publication et mention de la délivrance du brevet: **11.12.1996**
(21) Numéro de dépôt: 93401236.0
(22) Date de dépôt: 13.05.1993
(51) Int. Cl.: F27B 7/28, F27B 7/08, B01J 19/02, B01J 19/28, C22C 38/18, C01B 21/06

(54) **Four tournant pour réaction chimique**
Drehofen für chemische Reaktionen
Rotary-drum furnace for chemical reactions

(30) Priorité: 21.05.1992 FR 9206350
(43) Date de publication de la demande: 24.11.1993
(73) Titulaire: INSTITUT FRANCAIS DU PETROLE, 92502 Rueil-Malmaison (FR)
(72) Inventeur: Morlec, Jean, F-44600 Saint Nazaire (FR); Sugier, André, F-92500 Rueil Malmaison (FR)

(56) Documents cités:
- CH-A- 256 598
- FR-A- 2 114 331
- FR-A- 2 594 109
- GB-A- 215 231
- PATENT ABSTRACTS OF JAPAN vol. 8, no. 114 (C-225)26 Mai 1984 & JP-A-59 027 851 (MITSUBISHI GAS KAGAKU K.K) 14 Février 1984
- CHEMICAL ABSTRACTS, vol. 108, no. 22, 27 Janvier 1988, Columbus, Ohio, US; abstract no. 191533p, 'apparatus for producing high purity monoxide ceramic powder' page 305 ;colonne DR ;

## Description

La présente invention concerne un four tournant renfermant au moins un tube creux fonctionnant à très haute température utilisable pour y faire des réactions chimiques à l'intérieur du tube. Par des conditions appropriées on génère à l'intérieur du ou des tubes fabriqués en acier réfractaire une couche protectrice d'alumine dont la durée de vie peut être très longue et qui permettra au cours des réactions effectuées à l'intérieur d'un tube d'éliminer certaines réactions parasites qui jusqu'à présent s'effectuaient lors du contact des réactifs chimiques avec les éléments métalliques du tube. A titre d'exemple d'utilisation on peut citer la fabrication des nitrures.

Le document FR-A-2114331 décrit un dispositif rotatif de réduction dont la surface intérieure du four en acier résistant à la chaleur est revêtue d'une matière sélectionnée dans le groupe comprenant l'oxyde d'aluminium, le mullite, la silice et l'oxyde de zirconium.

L'originalité du four selon l'invention repose sur l'utilisation d'un tube en alliage spécifique, de type acier réfractaire haute température à base de fer, de chrome et d'aluminium renfermant 22% poids en chrome, 5,8% en aluminium, le complément en fer. Dans des conditions oxydantes appropriées (avec par exemple balayage d'air à 600 - 1 000°C ou à titre d'autres exemples balayage avec des mélanges H₂/H₂O, H₂/O₂, CO/H₂, à plus ou moins forte teneur en H₂) on génère une couche d'alumine, au moins en partie à l'intérieur du tube.

En outre, il est possible de déposer sur la paroi interne du tube avant ou après avoir révélé la couche d'oxyde un film d'alumine en surface ou un film d'un autre matériau, par exemple d'une silice ou de silice alumine ou de zircone ou le zircone oxyde d'yttrium etc.. ou d'un tamis moléculaire (zéolite). Ce film pourra être déposé par toute méthode connue, imprégnation par barbottine, projection par plasma, par flamme, pulvérisation, etc...

Les tubes selon l'invention, conviennent ainsi qu'écrit plus haut pour la synthèse des nitrures. En effet, la synthèse des nitrures s'effectue généralement à partir d'une charge pulvérulente composée d'au moins un oxyde métallique traitée sous atmosphère d'ammoniac à haute température. Cependant, la décomposition de l'ammoniac en hydrogène est catalysée par les matériaux en acier réfractaire généralement utilisés pour la fabrication des tubes de four.

Le dépôt d'alumine obtenu par oxydation appropriée du tube selon l'invention permet ici d'annihiler la réaction catalytique du fer ou d'autres métaux sur l'ammoniac (donc d'annihiler la décomposition d'ammoniac) et de réaliser la réaction dans de bien meilleures conditions que dans un tube ne comportant pas de couche protectrice.

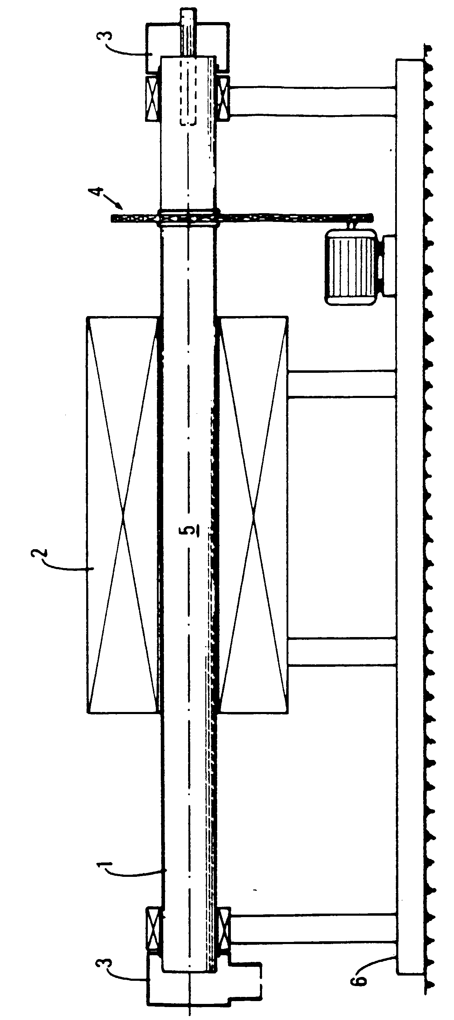

L'utilisation comprend (voir figure unique)
- au moins un tube tournant en acier spécial FeCrAl,
- un moufle (2) équipé d'éléments par exemple en CSi (carbone de silicium) assurant une température dans le produit de 1 350° C par exemple.
- un système (4) de régulation sur la température de peau de tube,
- un système de mesure des températures au sein du lit réactionnel généralement poudre ou matériel pulvérulent. (lit de poudre à l'intérieur de la zone réactionnelle (tube)).
- un groupe d'entraînement assurant une rotation de 1 < RPM < 20 (valeurs données à titre d'exemples).
- des boitiers (3) de rotation étanches de chaque côté du tube et assurant une étanchéïté aux gaz tels que NH3 et H2,
- un système d'alimentation et de déchargement en continu du tube assurant un débit par exemple de 50 à 500 G/h.
- un chassis (6)

L'invention concerne donc un four à tube tournant fonctionnant de 600°C jusqu'à 1 400°C (de préférence 600-1350°C voire 800-1 350°C) et étanche aux gaz (air, N₂, NH₃, H₂...) Le tube tournant est constitué d'au moins un alliage spécial FeCrAl qui peut fonctionner en atmosphère réductrice ou oxydante, moyennant certaines précautions de mise en route. Le tube du four tourne sur lui-même le long de son axe longitudinal. La réaction chimique est réalisée à l'intérieur du tube. La température maximale d'utilisation côté éléments chauffants est de 1 400°C, ce qui fixe la température maximum du procédé à quelques dizaines de degrés en dessous (1 350C environ).

A titre d'exemple, avec un taux de remplissage d'environ 15% (fourchette générale préférée de remplissage : 5 à 25%, en volume) et un temps de séjour de par exemple 60 minutes, les débits d'une poudre de densité 0.5 par exemple seront de l'ordre de moins 100 G/h dans un four de diamètre de 50 mm ou d'environ 4 KG/h dans un four de diamètre de 200 mm.

Les paramètres de réglage du four sont la vitesse de rotation (RPM de l'angle d'inclinaison (α) qui permettent d'ajuster les conditions opératoires en fonction des spécifications des produits recherchés.

Le tube tournant est équipé à chaque extrêmité d'un boitier rotatif assurant l'étanchéïté, par exemple à 20 RPM, jusqu'à 5 Bar, avec les dispositifs d'alimentation et de soutirage.

Le moufle électrique (2) du four est équipé de une ou plusieurs zones chauffées par des résistances à base par exemple de bisiliciure de molybdène dont les caractéristiques électriques et mécaniques permettent leur utilisation jusqu'à près de 1 700°C.

Le profil de température obtenu dans le tube de four dépendra du nombre de zone de régulation, mais aussi des paramètres opératoires :
- débit de charge poudre et gaz,
- compositions chimiques,
- réaction, endothermique, exothermique.

Le contrôle des températures dans les réactifs à l'intérieur de la zone réactionnelle (5) s'effectue par l'intermédiaire de capteurs installés sur les internes du tube tournant et reliés en partie arrière à un ensemble rotatif d'indicateurs de température autonomes.

Le chassis de l'appareil (6) comporte un moto-réducteur à vitesse variable de 1 à 20 RPM ou 1 à 5 encore, toujours à titre d'exemple), transmettant par l'intermédiare d'une chaîne et d'un jeu de roues dentées, la rotation au tube de four. Un système de secours sur batterie ou courant secouru et un groupe d'entraînement séparé assureront le maintien de la rotation du tube en cas de coupure électrique pendant toute la période de refroidissement du tube tournant. En outre, un détecteur de rotation sera relié à la centrale d'alarmes de l'atelier ou du laboratoire. Le chassis comporte en outre éventuellement des vis de calage qui serviront à ajuster l'angle d'inclinaison α, dont la mesure sera effectuée par l'intermédiaire d'un niveau à eau installé avec deux réglettes graduées sur le chassis.

## Revendications

1. Appareil pour réaction chimique comportant au moins un tube tournant sur lui-même le long de son axe longitudinal, la réaction chimique s'effectuant à l'intérieur du tube, appareil caractérisé en ce que le tube tournant est réalisé en un acier spécial à base de fer, de chrome et d'aluminium et en ce que préalablement à son utilisation, l'intérieur du tube a été soumis à des conditions oxydantes appropriées de façon à révéler une couche d'alumine à l'intérieur d'une partie au moins du tube et en ce que ledit acier renferme en poids environ 22% de chrome, 5,8% d'aluminium et le complément en fer.

2. Appareil selon la revendication 1 dans lequel avant ou après révélation de la couche d'alumine révélé, on crée un film d'alumine ou d'un composé équivalent.

3. Appareil selon la revendication 2 dans lequel le tube tournant fonctionne entre 600 et 1 400°C et est étanche aux gaz, pouvant en outre fonctionner en atmosphère réductrice ou oxydante.

4. Appareil selon l'une des revendications précédentes dans lequel le taux de remplissage d'un tube est compris entre 5 et 25% en volume, (remplissage d'une poudre réactionnelle ou de matériel pulvérulent réactionnel).

5. Appareil selon l'une des revendications 1 à 4 comportant :
- au moins un tube tournant
- au moins un moufle
- un système de régulation sur la température de peau de tube
- un système de mesure des températures au sein du lit réactionnel à l'intérieur de la zone réactionnelle (tube)
- un groupe d'entraînement
- des boitiers de rotation étanches de chaque côté du tube
- un système d'alimentation et de déchargement en continu du tube.

6. Utilisation de l'appareil selon l'une des revendications 1 à 5 dans la synthèse des nitrures.

## Patentansprüche

1. Vorrichtung für chemische Reaktionen, wenigstens ein sich um sich selbst entlang seiner Längsachse drehendes Rohr umfassend, wobei die chemische Reaktion im Inneren des Rohres abläuft, dadurch gekennzeichnet, daß das Drehrohr aus einem Sonderstahl auf der Basis von Eisen, Chrom und Aluminium hergestellt ist und das vor seiner Verwendung das Innere des Rohres oxidierenden geeigneten Bedingungen ausgesetzt wurde, derart, daß eine Aluminiumoxidschicht im Inneren wenigstens eines Teils des Rohres sich entwickelt und daß dieser Stahl etwa 22 Gew.-% Chrom, 5,8 % Aluminium und den Rest Eisen umfaßt.

2. Vorrichtung nach Anspruch 1, bei dem vor oder nach der Entwicklung der entwickelten Aluminiumoxidschicht man einen Aluminiumoxidfilm oder eine äquivalente Zusammensetzung hervorruft.

3. Vorrichtung nach Anspruch 2, bei der das Drehrohr zwischen 600 und 1400°C arbeitet und gasdicht ist und im übrigen in reduzierender oder oxidierender Atmosphäre arbeiten kann.

4. Vorrichtung nach einem der vorhergehenden Ansprüche, bei der der Füllgrad eines Rohres zwischen 5 und 25 Vol.-% liegt (Füllung mit einem Reaktionspulver oder einem pulverförmigen Reaktionsmaterial).

5. Vorrichtung nach einem der Ansprüche 1 bis 4 umfassend:
- wenigstens ein Drehrohr
- wenigstens eine Muffel
- ein System zur Einstellung und Steuerung der Temperatur der Rohrhaut
- ein System zum Messen der Temperaturen inmitten des Reaktionsbettes im Inneren der Reaktionszone (Rohr)
- eine Antriebsgruppe
- dichte Drehgehäuse auf jeder Seite des Rohres und
- ein System zur kontinuierlichen Speisung und Entladung des Rohres.

6. Verwendung der Vorrichtung nach einem der Ansprüche 1 bis 5, für die Synthese der Nitride.

## Claims

1. Apparatus for chemical reaction comprising at least one tube which rotates about itself along its longitudinal axis, the chemical reaction being effected in the interior of the tube, the apparatus being characterised in that the rotary tube is made of a special steel based on iron, chromium and aluminium and that prior to its use the interior of the tube has been subjected to suitable oxidising conditions so as to reveal a layer of alumina in the interior of a part at least of the tube and that said steel contains by weight about 22% of chromium, 5.8% of aluminium and the balance iron.

2. Apparatus according to claim 1 wherein, prior to or after the revealed layer of alumina is revealed, a film of alumina or an equivalent compound is created.

3. Apparatus according to claim 2 wherein the rotary tube operates at between 600 and 1400°C and is sealed with respect to gases, also being capable of operating with areducing or oxidising atmosphere.

4. Apparatus according to one of the preceeding claims wherein the degree of filling of a tube is between 5 and 25% by volume (filling with a reaction powder or a reaction material in powdery form).

5. Apparatus according to one of claims 1 to 4 comprising:
- at least one rotary tube
- at least one muffle
- a regulating system for the tube skin temperature
- a system for measuring the temperatures within the reaction bed in the interior of the reaction zone (tube)
- a drive arrangement
- sealing rotational casings at each end of the tube and
- a system for continuous feed and discharge of the tube.

6. Use of the apparatus according to one of claims 1 to 5 in the synthesis of nitrides.
